Europäisches Patentamt

(19) European Patent Office

Office européen des brevets

(11) **EP 0 734 756 A2**

(12) **EUROPEAN PATENT APPLICATION**

(43) Date of publication:
02.10.1996 Bulletin 1996/40

(51) Int. Cl.$^6$: **B01D 53/94**, B01J 23/648

(21) Application number: 96105128.1

(22) Date of filing: 29.03.1996

(84) Designated Contracting States:
**DE FR GB**

(30) Priority: **30.03.1995 JP 74139/95**

(71) Applicants:
- **TOYOTA JIDOSHA KABUSHIKI KAISHA
  Aichi-ken (JP)**
- **KABUSHIKI KAISHA TOYOTA CHUO
  KENKYUSHO
  Aichi-gun Aichi-ken, 480-11 (JP)**
- **CATALER INDUSTRIAL CO., LTD.
  Ogasa-gun, Shizuoka-ken (JP)**

(72) Inventors:
- **Sato, Akemi,
  c/o Toyota Jidosha K.K.
  Toyota-shi, Aichi-ken (JP)**
- **Yamasita, Koichi,
  c/o Toyota Jidosha K.K.
  Toyota-shi, Aichi-ken (JP)**

- **Banno, Kouji,
  c/o K.K. Toyota Chuo Kenkyusho
  Nagakute-cho, Aichi-gun, Aichi-ken (JP)**
- **Sugiura, Masahiro,
  c/o K.K. Toyota Chuo Kenkyusho
  Nagakute-cho, Aichi-gun, Aichi-ken (JP)**
- **Kumai, Yoko,
  c/o K.K. Toyota Chuo Kenkyusho
  Nagakute-cho, Aichi-gun, Aichi-ken (JP)**
- **Kasahara, Koichi,
  c/o Cataler Industrial Co., Ltd.
  Daito-cho, Ogasa-gun, Shizuoka-ken (JP)**
- **Aono, Norihiko,
  c/o Cataler Industrial Co., Ltd.
  Daito-cho, Ogasa-gun, Shizuoka-ken (JP)**

(74) Representative: **KUHNEN, WACKER & PARTNER
Alois-Steinecker-Strasse 22
D-85354 Freising (DE)**

(54) **Catalyst for purifying exhaust gases from a diesel engine**

(57)     A catalyst for purifying exhaust gases from a diesel engine has a catalyst substrate; a catalyst support layer; at least one platinum group element loaded on the catalyst support layer; and a compound oxide of V and La and so on further loaded thereon. In another aspect, a catalyst for purifying exhaust gases from a diesel engine wherein at least one alkaline earth metal is loaded on the catalyst support layer comprising silica or the like. In still another aspect, a catalyst for purifying exhaust gases from a diesel engine wherein the catalyst support layer comprises a compound oxide comprising silica and at least one alkaline earth metal. These aspects of the present catalyst can keep the activity in oxidation and decomposition of exahust gases as well as suppress the formation of $SO_3$.

## Description

BACKGROUND OF THE INVENTION

Field of the Invention

The present invention relates to a catalyst for purifying exhaust gases from a diesel engine. More particularly, it relates to the catalyst for purifying harmful components which are included in exhaust gases from a diesel engine which comprise carbon monoxide (CO), hydrocarbons (HC) and soluble organic fractions (SOF) and at the same time, for reducing the exhaust amount of sulfate.

Description of the Related Art

As to gasoline engines, development of technique for meeting severe regulations of exhaust gases has securely, decreased harmful components in exhaust gases. In the field of diesel engines, however, because of the unique fact that harmful components are exhausted in the form of particulates (carbon particulates, sulfur particulates such as sulfate and high molecular hydrocarbon particulates), the regulations and the development of techniques for decreasing toxic substances in exhaust gases are behind those for gasoline engines. It has been desired to develop an apparatus which can securely purify exhaust gases from a diesel engine.

Apparatus for purifying exhaust gases from a diesel engines which have been developed so far mainly comprise a trap type apparatus for purifying exhaust gases which employs a trap type catalyst for purifying exhaust gases; and an open type apparatus for purifying exhaust gases which employs an open type catalyst for purifying exhaust gases.

As for a trap type catalyst for purifying exhaust gases, a wall flow type honeycomb body (diesel particulate filter (DPF)) made of ceramics can be employed. This wall flow type has a honeycomb structure wherein cell channel openings are plugged in a checkerboad fashion at one end and alternately at the other. In the apparatus for purifying exhaust gases employing this catalyst for purifying exhaust gases, exhaust gases are filtered through DPF and particulates are scavenged and when the pressure loss is increased, accumulated particulates are burned by using a burner so as to reproduce DPF. Another catalyst for purifying exhaust gases has also been examined, in which a catalyst support layer is formed by alumina on a catalyst substrate of DPF so as to scavenge particulates as well as to oxidize or decompose CO, HC and SOF and platinum (Pt) is loaded on this catalyst support layer.

On the other hand, as for an open type catalyst for purifying exhaust gases, there can be employed a catalyst substrate composed of straight flow type honeycomb body, a catalyst support layer formed by alumina on this catalyst substrate and Pt which is loaded on this catalyst support layer in the same way as in a gasoline engine. With this open type apparatus for purifying exhaust gases, it is possible to oxidize or decompose CO, HC, and so on by the catalytic action of Pt.

However, in a trap type or open type apparatus for purifying exhaust gases including the above mentioned platinum, the catalyst support layer adsorbs $SO_2$ and at high temperatures, $SO_2$ is oxidized by the catalytic action of Pt so that $SO_2$ is emitted in the form of $SO_3$. Particularly in a diesel engine, sufficient oxygen is contained in exhaust gases so that $SO_2$ is liable to be oxidized by this oxygen and $SO_2$ is easily emitted in the form of $SO_3$. $SO_2$ is not measured as particulates but $SO_3$ is measured as particulates. Also $SO_3$ easily reacts with water vapor present in the exhaust gases in a large amount, to form sulfuric acid mist which is then exhausted in the form of sulfate. Therefore, these apparatuses for purifying exhaust gases have a fault that the amount of particulates is increased owing to the exhaust of sulfate at high temperatures.

Under these circumstances, it has been suggested to provide a catalyst for purifying exhaust gases, in which Pt, rhodium (Rh) and palladium (Pd) as well as vanadium oxide are loaded on the catalyst support layer (Japanese Examined Patent Publication (KOKOKU) No. 32934/1990). By this suggested catalyst for purifying exhaust gases, it is possible that vanadium oxide acts on Pt in some way so as to suppress to form $SO_3$.

However in each of the above-mentioned catalysts for purifying exhaust gases, it was found that keeping activity in oxidation or decomposition of CO, HC and SOF and suppressing Formation of $SO_3$ are not sufficiently conducted.

SUMMARY OF THE INVENTION

The present invention has been developed in view of the above-mentioned problems. It is an object of the present invention to provide a catalyst for purifying exhaust gases from a diesel engine which can keep or improve the activity in oxidation or decomposition of CO and at the same time can sufficiently suppress the formation of $SO_3$.

The conventional catalysts for purifying exhaust gases in which Pt as well as vanadium oxide is loaded simply on the catalyst support layer has been ineffective in suppressing the formation of $SO_3$ based on the test results conducted by the present inventors.

Accordingly, in order to solve the above-mentioned problems, the present inventors have earnestly made researches and as the result, completed the present invention. The first aspect of the present invention is a catalyst for purifying exhaust gases from a diesel engine comprising: a catalyst substrate; a catalyst support layer formed on the catalyst substrate; at least one platinum group element loaded on the catalyst support layer; and a compound oxide of vanadium with at least one element selected from the group consisting of lanthanum, cerium, yttrium and tungsten, the compound oxide being loaded further on the catalyst support layer. The present inventors have found that keeping the activity in oxidation or decomposition of CO and so on can be obtained and at the same time, suppressing the formation of $SO_3$ can be securely realized, unlike that of the conventional catalyst for purifying exhaust gases, by loading the compound oxide of V and La or the like on the catalyst support layer besides at least one platinum group element.

Namely, in the catalyst for purifying exhaust gases according to the first aspect of the present invention, the compound oxide of V and La or the like somehow effects on the platinum group element in which makes it possible to keep the activity in oxidation or decomposition of CO and so on as well as to suppress the formation of $SO_3$.

Also, as in the conventional catalyst for purifying exhaust gases in which the vanadium oxide is simply loaded on the catalyst support layer, vanadium oxide which is toxic material is liable to be diffused to the outside air. In using this conventional catalyst, when it is heated bat the temperature around 700°C, the vanadium oxide is likely to be sublimed and diffused to the outside air. Thus diffused vanadium oxide may be dissolved in moisture contained in the outside air, which may cause the environmental contamination.

In this respect, in the catalyst for purifying exhaust gases according to the first aspect of the present invention, V forms a compound oxide together with La or the like so that vanadium oxide which is the toxic material is hard to be diffused to the outside air. Also in using the present catalyst, even if it is heated at the temperature not less than 700°C, the vanadium oxide is hard to be sublimed and vaporized to the outside air. A compound oxide herein means a crystalline oxide as single grain of which includes oxygen atoms and two kinds or more of metal atoms.

The second aspect of the present invention is a catalyst for purifying exhaust gases from a diesel engine comprising: a catalyst substrate; a catalyst support layer formed on the catalyst substrate comprising at least one inorganic oxide selected from the group consisting of silica, zeolite, silica-alumina and titania-alumina; and at least one platinum group element loaded on the catalyst support layer; and at least; one alkali metal loaded further on the catalyst support layer. Further, the present inventors have found that the activity in oxidation or decomposition of CO and so on can be retained and at the same time, suppressing the formation of $SO_3$ can be realized securely if the alkali metal is further loaded on the catalyst support layer composed of silica and so on.

Namely, in the catalyst for purifying exhaust gases according to the second aspect of the present invention, the alkali metal reacts somehow effects on the platinum group element of Pt and so on so that it is possible to keep the activity in oxidation and decomposition of CO and so on as well as to suppress the formation of $SO_3$.

It has already been suggested that the catalyst support layer is formed of titania, and Pt, Rh and Pd as well as alkali metal and an alkaline earth metal are loaded on this catalyst support layer (Japanese Unexamined Patent Publication (KOKAI) No. 4-250851). However, this suggestion limits the catalyst support layer to titania, so this suggestion does not suggest nor disclose the catalyst for purifying exhaust gases according to the second aspect of the present invention, in which the catalyst support layer comprises at least one selected from the group consisting of silica, zeolite, silica-alumina and titania-alumina.

The third aspect of the present invention is a catalyst for purifying exhaust gases from a diesel engine comprising: a catalyst substrate; a catalyst support layer formed on the catalyst substrate comprising a compound oxide of silica and at least one alkaline earth metal; and at least one platinum group element loaded on the catalyst support layer. In order to avoid the poisoning caused by sulfate, it has been told that silica, titania or zirconia is suitable as for the catalyst support layer of the catalyst for purifying exhaust gases from a diesel engine. However based on the test results by the present inventors, if the catalyst support layer is formed of only these silica, titania and zirconia on which layer the platinum group elements of Pt and so on are to be loaded, it is impossible to control the formation of $SO_3$.

In order to solve the above-mentioned problems, the inventors have furthermore found that the activity in oxidation or decomposition of CO and so on can be retained and at the same time, suppressing the formation of $SO_3$ can be realized almost securely in the case that a catalyst support layer comprises at least silica and that this silica forms a compound oxide together with an alkaline earth metal The inventors also have found that keeping the activity in oxidation or decomposition of CO and so on, and suppressing the formation of $SO_3$ cannot be obtained in the case of a compound oxide composed of alumina and an alkaline earth metal.

Namely, in the catalyst for purifying exhaust gases according to the third aspect, the compound oxide composed of silica and the alkaline earth metal somehow effects on the platinum group element of Pt and so on. It is also assumed that $SO_3$ which has already been generated was trapped by the alkaline earth metal whereby $SO_3$ is not exhausted to the outside air. Accordingly, in the catalyst for purifying exhaust gases according to the third aspect, it is possible to keep the activity in oxidation and decomposition of CO and so on as well as to suppress the formation of $SO_3$.

DETAILED DESCRIPTION OF THE PREFERRED EMBODIMENTS

A catalyst for purifying exhaust gases from a diesel engine comprising a catalyst support layer; at least one platinum group element loaded on the catalyst support layer; and a compound oxide comprising vanadium and at least one element selected from the group consisting of lanthanum, cerium, yttrium and tungsten which is further loaded on the catalyst support layer.

This catalyst for purifying exhaust gases can be formed in a shape of pellet by a catalyst support layer and at least one platinum group element loaded on this catalyst support layer and also this catalyst can be formed integrally with the catalyst substrate. As for a catalyst substrate, DPF made of cordierite, straight-flow-type honeycomb body and pellet can be employed. Furthermore, honeycomb body made of metal can be employed.

The catalyst support layer can be formed by a fire-resistant inorganic oxide selected from the group consisting of alumina, silica, titania, zeolite, silica-alumina and titania-alumina. A fire-resistant inorganic oxide preferably has its average particle diameter being 20 $\mu$m or less and its specific surface area being 10 $m^2$/g or more. When the fire-resistant inorganic oxide has its average particle diameter more than 20 $\mu$m and also its specific surface area less than 10 $m^2$/g, sufficient decomposition activity of SOF may not be obtained. Also, the coating amount of catalyst support layer is preferably in the range of 10 to 120 g per liter of the catalyst for purifying exhaust gases.

As for a platinum group element, at least one selected from the group consisting of Pt, palladium (Pd), rhodium (Rh), ruthenium (Ru), osmium (Os) and iridium (Ir) can be employed. Pt, Pd and Rh are mainly selected.

For example, the loading amount of Pt is preferably 0.01 to 10.0 g per liter of the catalyst for purifying exhaust gases. When the Pt amount is less than 0.01 g/l, sufficient oxidation or decomposition activity may not be obtained On the other hand, when the Pt amount is more than 10.0 g/l, the more increase in the loading amount does not improve oxidation or decomposition activity the more, but unfavorably increases the production cost of the catalyst for purifying exhaust gases. Especially, the loading amount of Pt as in the range from 0.1 to 3.0 g/l is more preferable in respect of oxidation or decomposition activity and production cost.

The loading amount of Pd is preferably 0.01 to 20.0 g per liter of the catalyst for purifying exhaust gases. When the Pd amount is less than 0.01 g/l, sufficient oxidation or decomposition activity may not be obtained. On the other hand, when the Pd amount is more than 20.0 g/l, the more increase in the loading amount does not improve oxidation or decomposition activity the more, but unfavorably increases the production cost of the catalyst for purifying exhaust gases. Especially, the loading amount of Pd as in the range from 0.5 to 3.0 g/l is more preferable in respect of oxidation or decomposition activity and production cost.

The loading amount of Rh is preferably 0.01 to 1.0 g per liter of the catalyst for purifying exhaust gases. When the Rh amount is less than 0.01 g/l, sufficient oxidation or decomposition activity may not be obtained. On the other hand, when the Rh amount is more than 1.0 g/l, the more increase in the loading amount does not improve oxidation or decomposition activity the more, but unfavorably increases the production cost of the catalyst for purifying exhaust gases. Especially, the loading amount of Rh as in the range From 0.05 to 0.5 g/l is more preferable in respect of oxidation or decomposition activity and production cost.

Vanadium (V) and at least one selected from the group consisting of lanthanum (La), cerium (Ce), yttrium (Y) and tungsten (W) form a compound oxide. The loading amount of compound oxide is preferably 1 to 70 g per liter of the catalyst for purifying exhaust gases.

The loading amount of V in the compound oxide onto the catalyst for purifying exhaust gases is preferably 0.01 to 0.5 mol of vanadium per liter of the catalyst for purifying exhaust gases. When the loading amount of V is less than 0.01 mol/l, sufficient oxidation or decomposition activity may not be obtained. On the other hand, when the V amount is more than 0.5 mol/l, the more increase in the loading amount does not improve oxidation or decomposition activity the more, but unfavorably increases the production cost of the catalyst the more for purifying exhaust gases. Especially, the loading amount of V as in the range from 0.05 to 0.5 mol/l is more preferable in respect of oxidation or decomposition activity and production cost.

The loading amount of at least one selected from the group consisting of La, Ce, Y and W in the compound oxide onto the catalyst For purifying exhaust gases is preferably 0.01 to 0.5 mol per liter of the catalyst for purifying exhaust gases in respect of oxidation or decomposition activity and production cost. When the loading amount of La is less than 0.01 mol/l, sufficient oxidation or decomposition activity may not be obtained. On the other hand, when the La amount is more than 0.5 mol/l, the more increase in the loading amount does not improve oxidation or decomposition activity the more, but unfavorably increases the production cost of the catalyst for purifying exhaust gases.

This catalyst for purifying exhaust gases can be applied to the trap type apparatus for purifying exhaust gazes or the open type apparatus for purifying exhaust gases.

In the second aspect of the present invention provides a catalyst for purifying exhaust gases from a diesel engine comprising: a catalyst support layer which comprises at least one selected from the group consisting of silica, zeolite, silica-alumina and titania-alumina; at least one platinum group element loaded on the catalyst support layer; and at least one alkali metal further loaded on the catalyst support layer.

The catalyst substrate, catalyst support layer and platinum group element are the same as those of the catalyst for purifying exhaust gases in the first aspect. However, the catalyst support layer is preferably formed by the fire-resistant inorganic oxide with respect to improving purification efficiency of CO.

As for the alkali metal, it may be at least one alkali metal selected from the group consisting of lithium (Li), sodium (Na), potassium (K), rubidium (Rb), cesium (Cs) and francium (Fr).

The loading amount of Li is preferably 0.01 to 0.1 mol of lithium per liter of the catalyst for purifying exhaust gases. When the loading amount of Li is less than 0.01 mol/l, sufficient oxidation or decomposition activity may not be obtained. On the other hand, when the Li amount is more than 0.1 mol/l, the more increase in the loading amount does not improve oxidation or decomposition activity the more, but unfavorably increases the production cost of the catalyst the more for purifying exhaust gases. Especially, the loading amount of Li as in the range from 0.01 to 0.05 mol/l is more preferable in respect of oxidation or decomposition activity and production cost.

In the third aspect, the present invention provides a catalyst for purifying exhaust gases from a diesel engine comprising: a catalyst support layer which comprises an compound oxide comprising silica and at least one alkaline earth metal; and at least one platinum group element which is loaded on the catalyst support layer;

The catalyst substrate and the platinum group elements are the same as those of the catalyst for purifying exhaust gases in the first aspect.

The catalyst support layer comprises at least silica: For example, amorphous silica, zeolite and silica-alumina can from the catalyst support layer. The average particle diameter of the amorphous silica and the coating amount of the catalyst support layer are the same as those of the catalyst For purifying exhaust gases in the first aspect.

The alkaline earth metal may be at least one selected from the group consisting of calcium (Ca), strontium (Sr); barium (Ba), radium (Ra) beryllium (Be) and magnesium (Mg).

Silica and the at least one alkaline earth metal form the compound oxide. In this case, atomic ratio (alkaline earth metal / (alkaline earth metal + silicon)) is preferably 0.02 to 0.65. When the atomic ratio is less than 0.02 or the atomic ratio is more than 0.65, it is hard to realize both improvement in oxidation or decomposition activity and control in formation of $SO_3$. Especially, the atomic ratio in the range from 10 to 50% is more preferable in respect of oxidation or decomposition activity and control in formation of $SO_3$.

Having generally described the present invention, a further understanding can be obtained by reference to the specific preferred embodiments which are provided herein for purposes of illustration only and are not intended to limit the scope of the appended claims.

The present invention will be hereinafter detailed by means of the following preferred embodiments in which inventions described in each of claims were embodied together with comparative examples and by using Examinations 1 to 3. Needless to say, the technical range of each of Claims are not limited to these preferred embodiments.

(Examination 1)

In an examination 1, by using Preferred Embodiments 1 to 10 and Comparative Examples 1 to 5, the technical effects of the first aspect were confirmed.

First Preferred Embodiment

As for a catalyst substrate, a straight-flow-type honeycomb body (400 cells/in$^2$, diameter is 80 mm, length is 95 mm) made of cordierite was prepared. After slurry made of alumina powder, alumina hydrate and demineralized water was coated on this catalyst substrate, the coated catalyst substrate was dried and then it was calcinated for one hour at the temperature of 500°C, thereby preparing a catalyst support layer made of alumina on the catalyst substrate.

The catalyst substrate on which this catalyst support layer was formed was impregnated into a platinum chloride aqueous solution to load Pt thereon. The catalyst substrate on which Pt was thus loaded was impregnated in the oxalic acid aqueous solution in which a vanadium oxide had been dissolved under heating (hereinafter called as vanadium oxalate aqueous solution) and then impregnated in a lanthanum oxalate solution, thereby loading V and La on the substrate. Therefore; the catalyst for purifying exhaust gases of a First Preferred Embodiment (hereinafter called as the Preferred Embodiment Catalyst 1) was obtained.

When the catalyst support layer of this Preferred Embodiment Catalyst 1 was investigated by using X-ray analysis, it was found that a part of V and La formed the compound oxide. The compound oxide supposed to be LaVO$_3$ ($3 \leq X \leq 4$). The kinds of catalyst support layer and kinds of loading material of the Preferred Embodiment Catalyst 1 are shown in Table 1 (hereinafter, in the same way).

[TABLE 1]

| CATALYST | | CATALYST SUPPORT LAYER | CATALYST INGREDIENTS (g/l) | | | | | | | | |
|---|---|---|---|---|---|---|---|---|---|---|---|
| | | | PLATINUM GROUP ELEMENTS | | | ELEMENTS of COMPOUND OXIDE | | | | | |
| | | | Pt | Pd | Rh | V | La | Ce | Y | W | FORMING |
| EXAMPLES | 1 | $Al_2O_3$ | 1.2 | - | - | 0.08 | 0.02 | - | - | - | ◯ |
| | 2 | $Al_2O_3$ | 1.2 | - | - | 0.08 | - | 0.02 | - | - | ◯ |
| | 3 | $Al_2O_3$ | 1.2 | - | - | 0.08 | - | - | 0.02 | - | ◯ |
| | 4 | $Al_2O_3$ | 1.2 | - | - | 0.08 | - | - | - | 0.02 | ◯ |
| | 5 | $Al_2O_3$ | 1.0 | - | - | 0.08 | 0.02 | - | - | - | ◯ |
| | 6 | $Al_2O_3$ | 2.0 | - | - | 0.08 | 0.02 | - | - | - | ◯ |
| | 7 | $Al_2O_3$ | 1.0 | - | 0.2 | 0.08 | - | 0.02 | - | - | ◯ |
| | 8 | $Al_2O_3$ | - | 1.0 | 0.2 | 0.08 | - | 0.02 | - | - | ◯ |
| | 9 | $SiO_2$ | 1.2 | - | - | 0.08 | 0.02 | - | - | - | ◯ |
| | 10 | $TiO_2$ | 1.2 | - | - | 0.08 | 0.02 | - | - | - | ◯ |
| COMPARATIVE EXAMPLES | 1 | $Al_2O_3$ | 1.2 | - | - | - | - | - | - | - | X |
| | 2 | $Al_2O_3$ | 1.2 | - | - | 0.08 | - | - | - | - | X |
| | 3 | $Al_2O_3$ | 1.2 | - | - | - | 0.02 | - | - | - | X |
| | 4 | $Al_2O_3$ | 1.0 | - | 0.2 | 0.08 | - | 0.02 | - | - | X |
| | 5 | $Al_2O_3$ | - | 1.0 | 0.2 | 0.08 | - | 0.02 | - | - | X |

Second Preferred Embodiment

A Preferred Embodiment Catalyst 2 was produced in the same way as that of the First Preferred Embodiment, except that in place of the lanthanum oxalate solution was employed a cerium oxalate solution.

Third Preferred Embodiment

A Preferred Embodiment Catalyst 3 was produced in the same way as that of the First Preferred Embodiment, except that in place of the lanthanum oxalate solution was employed an yttrium nitrate solution.

Fourth Preferred Embodiment

A Preferred Embodiment Catalyst 4 was produced in the same way as that of the First Preferred Embodiment, except that in place of the lanthanum oxalate solution was employed an ammonium metatungstate aqueous solution.

Fifth Preferred Embodiment

A Preferred Embodiment Catalyst 5 was produced in the same way as that of the First Preferred Embodiment, except that the loading amount of Pt was changed.

Sixth Preferred Embodiment

A Preferred Embodiment Catalyst 6 was produced in the same way as that of the First Preferred Embodiment, except that the loading amount of Pt was changed.

Seventh Preferred Embodiment

The same catalyst substrate as in the First Preferred Embodiment was coated with a slurry made of an alumina powder, a vanadium oxide powder, a sodium cerium powder, an alumina hydrate solution and distilled water. The coated substrate was dried and then it was calcinated at 500°C for one hour, thereby preparing a catalyst support layer made of alumina including V and Ce on the catalyst substrate.

The catalyst substrate on which this catalyst support layer was formed was impregnated into an ammine platinum hydroxide solution to load Pt thereon. The catalyst substrate on which Pt was loaded was impregnated into a rhodium nitrate solution to load Rh thereon. In this way, the Preferred Embodiment Catalyst 7 was obtained.

When the catalyst support layer of this Preferred Embodiment Catalyst 7 was investigated by using X-ray diffraction, it was found that a part of V and Ce formed the compound oxide. The compound oxide was supposed to be $CeVO_x$ ($3 \leq x \leq 4$).

Eighth Preferred Embodiment

A Preferred Embodiment Catalyst 8 was produced in the same ways as that of the Seventh preferred Embodiment except that in place of the ammine platinum hydroxide solution was employed a palladium nitrate solution.

Ninth Preferred Embodiment

The same catalyst substrate as in the First Preferred Embodiment was coated with a slurry made of a silica powder, a silica sol and distilled water. The coated substrate was dried and then it was calcinated at 500° C for one hour, thereby preparing a catalyst support layer made of silica on the catalyst substrate.

The catalyst substrate on which this catalyst support layer was formed was impregnated into a chloroplatinic acid aqueous solution to load Pt thereon. The catalyst substrate on which Pt was loaded was impregnated into a vanadium oxalate and lanthanum oxalate solution to load V and La thereon. In this way, the Preferred Embodiment Catalyst 9 was obtained.

When the catalyst support layer of this Preferred Embodiment Catalyst 9 was investigated by using X-ray analysis, it was found that a part of V and La formed the compound oxide.

Tenth Preferred Embodiment

The same catalyst substrate as in the First Preferred Embodiment was coated with a slurry made of a titania power, a titania sol and demineralized water. The coated substrate was dried and then it was calcinated at 500°C for one hour, thereby preparing a catalyst support layer made of titania on the catalyst substrate.

The catalyst substrate on which this catalyst support layer was formed was impregnated into a ammine platinum hydroxide solution to load Pt thereon. The catalyst substrate on which Pt was loaded was impregnated into a vanadium oxalate and lanthanum oxalate solution to load V and La thereon. In this way, the Preferred Embodiment Catalyst 10 was obtained.

When the catalyst support layer of this Preferred Embodiment Catalyst 10 was investigated by using X-ray analysis, it was found that a part of V and La formed the compound oxide.

Comparative Example 1

A catalyst for purifying exhaust gases of Comparative Example 1 (called as Comparative Example Catalyst 1, hereinafter in the same way) was produced in the same way as that of the First Preferred Embodiment, except that the catalyst substrate on which Pt was loaded was not impregnated into a vanadium oxalate and lanthanum oxalate solution.

Comparative Example 2

A Comparative Example Catalyst 2 was produced in the same ways as that of the First Preferred Embodiment, except that the catalyst substrate on which Pt was loaded was not impregnated into a lanthanum oxalate solution.

Comparative Example 3

A Comparative Example Catalyst 3 was produced in the same ways as that of the First Preferred Embodiment, except that the catalyst substrate on which Pt was loaded was not impregnated into a vanadium oxalate solution.

Comparative Example 4

A Comparative Example Catalyst 4 was produced in the same ways as that of the Seventh Preferred Embodiment, except that the catalyst substrate on which Pt was loaded was not impregnated into a vanadium oxalate solution.

Comparative Example 5

A Comparative Example Catalyst 5 was produced in the same ways as that of the Eighth Preferred Embodiment, except that the catalyst substrate on which Pt was loaded was not impregnated into a vanadium oxalate solution.

Evaluation 1

Each of the Preferred Embodiment Catalysts 1 to 10 and each of the Comparative Example Catalysts 1 to 5 were examined in an open type apparatus for purifying exhaust gases from a direct injection diesel engine of 3.61. After the engine was operated at full throttle of a constant-angle point for 500 hours, in 100N · m of 2500 revolutions, CO and HC of inlet gas and particulates were analyzed and at the same time, CO and HC of outlet gas and particulates were analyzed. Purification ability (%) of CO and HC were calculated by a mathematical formula 1. At this time, the temperature of inlet gas is 250°C.

$$\text{purification ability (conversion) (\%)} = \frac{\text{(inlet gas component concentration)} - \text{(outlet gas component concentration)}}{\text{inlet gas component concentration}} \times 100 \qquad \text{[mathematical formula 1]}$$

Next, the torque was set to be 180 N · m and the temperature of inlet gas was set to be 450°C, particulates of inlet gas and outlet gas were analyzed and the conversion (%) of particulates were calculated by the mathematical formula 1.

Also, each of Preferred Embodiment Catalysts 1 to 10 and each of Comparative Example Catalysts 1 to 5 were cut out of by 10 cc and each specimen was impregnated in water of 50 ml. After it was kept in water for 24 hours, an amount of V contained in water was measured by ICP (Inductively Coupled Plasma). Then, dissolution (%) of V was calculated by a mathematical formula 2.

$$\text{dissolution (\%) of V} = \left\{ 1 - \frac{\text{(amount of loaded V (mg))} - \text{(amount of dissolved V (mg))}}{\text{amount of loaded V(mg))}} \right\} \times 100 \qquad \text{[mathematical formula 2]}$$

The results are shown in Table 2.

[TABLE 2]

| CATALYST | | PURIFICA-TION at 250°C (%) | | CONVER-SION of PARTICU-LATES at 450°C (%) | DISSOLU-TION of V (%) |
|---|---|---|---|---|---|
| | | CO | HC | | |
| EXAMPLES | 1 | 75 | 80 | 10 | 2 |
| | 2 | 76 | 79 | 7 | 2 |
| | 3 | 76 | 80 | 7 | 4 |
| | 4 | 75 | 82 | 5 | 10 |
| | 5 | 72 | 77 | 8 | 2 |
| | 6 | 73 | 78 | 7 | 3 |
| | 7 | 79 | 84 | 12 | 1 |
| | 8 | 75 | 82 | 12 | 0 |
| | 9 | 79 | 79 | 11 | 2 |
| | 10 | 75 | 78 | 2 | 5 |
| COMPARATIVE EXAMPLES | 1 | 74 | 78 | 98 | - |
| | 2 | 72 | 77 | 15 | 45 |
| | 3 | 80 | 79 | 90 | - |
| | 4 | 78 | 79 | 30 | 42 |
| | 5 | 74 | 78 | 13 | 35 |

As shown in Table 2, in the Preferred Embodiment Catalysts 1 to 10 which have low dissolution of V, it is found that maintaining purification of CO and HC can be attained and at the same time conversion of particulates can be suppressed low compared with those of the Comparative Example Catalysts 1 to 5. This is because the formation of $SO_3$ can be more suppressed at high temperatures in the Preferred Embodiment Catalysts 1 to 10 so that exhaust amount of sulfate is reduced.

(Examination 2)

In a examination 2, by using Preferred Embodiments 11 to 20 and Comparative Examples 6 to 9, the technical effects of the second aspect were confirmed.

Eleventh Preferred Embodiment

The same catalyst substrate as in the First Preferred Embodiment was coated with a slurry made of silica-alumina powder, alumina hydrate and distilled water. The coated substrate was dried and then it was calcinated at 500°C for one hour, thereby preparing a catalyst support layer made of alumina on the catalyst substrate.

The catalyst substrate on which this catalyst support layer was formed was impregnated into a platinum chloride aqueous solution to load Pt thereon.

Then, the catalyst substrate on which Pt was loaded was impregnated into a potassium nitrate to load potassium thereon. In this way, the Preferred Embodiment Catalyst 11 was obtained. The kinds of the catalyst support layer, the average particle diameter of the fire-resistant inorganic oxide, coating amount and kinds ad loading amount of the catalyst ingredients of the Preferred Embodiment Catalyst 11 are shown in Table 3 (hereinafter, in the same way).

[TABLE 3]

| CATALYST | | CATALYST SUPPORT LAYER | | | CATALYST INGREDIENTS | | | | |
|---|---|---|---|---|---|---|---|---|---|
| | | | | | ALKALI METAL | | PLATINUM GROUP ELEMENTS (g/l) | | |
| | | KIND | AVERAGE PARTICLE DIAMETER ($\mu$m) | COATING AMOUNT (g/l) | ELEMENT | LOADING AMOUNT (mol/l) | Pt | Pd | Rh |
| EXAMPLES | 11 | $SiO_2$, $Al_2O_3$ | 5 | 50 | K | 0.04 | 1.0 | - | - |
| | 12 | $SiO_2$, $Al_2O_3$ | 10 | 30 | Na | 0.01 | 1.0 | - | - |
| | 13 | $SiO_2$, $Al_2O_3$ | 20 | 50 | Li | 0.04 | 1.0 | - | - |
| | 14 | $SiO_2$ | 5 | 60 | K | 0.03 | 1.0 | - | - |
| | 15 | $SiO_2$ | 10 | 70 | Na | 0.03 | 0.8 | - | - |
| | 16 | $SiO_2$, $Al_2O_3$ | 15 | 120 | K | 0.02 | - | 0.5 | - |
| | 17 | $SiO_2$ | 10 | 100 | K | 0.03 | - | 1.0 | - |
| | 18 | $SiO_2$ | 10 | 80 | K | 0.02 | - | 1.0 | 0.2 |
| | 19 | $SiO_2$ | 10 | 80 | Na | 0.04 | - | 1.0 | 0.2 |
| | 20 | $SiO_2$, $Al_2O_3$ | 10 | 120 | K | 0.05 | 0.8 | - | - |
| COMPARATIVE EXAMPLES | 6 | $Al_2O_3$ | 10 | 50 | - | - | 1.0 | - | - |
| | 7 | $SiO_2$ | 30 | 30 | - | - | 1.0 | - | - |
| | 8 | $SiO_2$ | 50 | 120 | - | - | 0.5 | - | - |
| | 9 | $SiO_2$, $Al_2O_3$ | 50 | 80 | - | - | 0.8 | - | - |

Twelfth Preferred Embodiment

A Preferred Embodiment Catalyst 12 was produced in the same way as that of the Eleventh Preferred Embodiment, except that in place of the potassium nitrate solution was employed a sodium nitrate solution.

Thirteenth Preferred Embodiment

A Preferred Embodiment Catalyst 13 was produced in the same way as that of the Eleventh Preferred Embodiment, except that in place of the potassium nitrate solution was employed a lithium nitrate.

Fourteenth Preferred Embodiment

The same catalyst substrate as in the First Preferred Embodiment was coated with a slurry made of a silica powder, a silica sol and distilled water. The coated substrate was dried and then it was calcined at 500°C for one hour, thereby preparing a catalyst support layer made of silica on the catalyst substrate.

The catalyst substrate on which this catalyst support layer was formed was impregnated into ammine platinum hydroxide solution to load Pt thereon.

Next, the catalyst substrate on which Pt was loaded was impregnated in a potassium nitrate solution to load potassium thereon. In this way, the Preferred Embodiment Catalyst 14 was obtained.

Fifteenth Preferred Embodiment

A Preferred Embodiment Catalyst 15 was produced in the same way as that of the Fourteenth Preferred Embodiment, except that in place of the potassium nitrate solution was employed a sodium nitrate solution.

Sixteenth Preferred Embodiment

A Preferred Embodiment Catalyst 16 was produced in the same way as that of the Eleventh Preferred Embodiment, except that in place of the chloroplatinic acid aqueous solution was employed a palladium nitrate solution.

Seventeenth Preferred Embodiment

A Preferred Embodiment Catalyst 17 was produced in the same way as that of the Fourteenth Preferred Embodiment, except that in place of the ammine platinum hydroxide solution was employed a palladium nitrate solution.

Eighteenth Preferred Embodiment

A Preferred Embodiment Catalyst 18 was produced in the same way as that of the Fourteenth Preferred Embodiment, except that in place of the ammine platinum hydroxide solution was employed a palladium nitrate solution and a rhodium nitrate solution.

Nineteenth Preferred Embodiment

A Preferred Embodiment Catalyst 19 was produced in the same way as that of the Eighteenth Preferred embodiment, except that in place of the potassium nitrate solution was employed a sodium nitrate solution.

Twentieth Preferred Embodiment

A Preferred Embodiment Catalyst 20 was produced in the same way as that of the Eleventh Preferred Embodiment, except that the catalyst substrate was DPF (200 cell/in$^2$, diameter is 80 mm, length is 95 mm) made of cordierite.

Comparative Example 6

The same catalyst substrate as in the First Preferred Embodiment was coated with a slurry made of alumina powder, alumina hydrate and distilled water. The coated substrate was dried and then it was calcined at 500°C for one hour, thereby preparing a catalyst support layer made of alumina on the catalyst substrate.

The catalyst substrate on which this catalyst support layer was formed was impregnated into a chloroplatinic acid solution to load Pt thereon. In this way, the Comparative Example Catalyst 6 was obtained.

Comparative Example 7

A Comparative Example Catalyst 7 was produced in the same way as that of the Fourteenth Preferred Embodiment, except that the catalyst substrate on which Pt was loaded was not impregnated into a potassium nitrate and the average particle diameter and coating amount of the fire-resistant inorganic oxide were changed.

Comparative Example 8

A Comparative Example Catalyst 8 was produced in the same way as that of the Fourteenth Preferred Embodiment, except that the catalyst substrate on which Pt was loaded was not impregnated into a potassium nitrate and the average particle diameter and coating amount of the fire-resistant inorganic oxide were changed and also the loading amount of Pt was changed.

Comparative Example 9

A Comparative Example Catalyst 9 was produced in the same way as that of the Twentieth Preferred Embodiment, except that the catalyst substrate on which Pt was loaded was not impregnated into a potassium nitrate and the average particle diameter and coating amount of the fire-resistant inorganic oxide were changed.

Evaluation 2

Each of the Preferred Embodiment Catalysts 11 to 20 and each of the Comparative Example Catalysts 6 to 9 was evaluated as in the same way as that of the Evaluation 1. CO, HC and SOF in the inlet gas were analyzed and at the same time, CO, HC and SOF in the outlet gas were analyzed. However, the Preferred Embodiment Catalyst 20 and the Comparative Example Catalyst 9 were examined in a trap type apparatus for purifying exhaust gases. And the Purification ability (%) of CO, HC and SOF were calculated by the above-mentioned mathematical formula 1. At this time, the temperature of the inlet gas was 250°C, a diluting tunnel was used in scavenging SOF and was determined by Soxhlet extraction.

Then, torque was set to be 180 N·m; the temperature of the inlet gas was set to be 380°C; $SO_2$ of the inlet gas and the outlet gas was analyzed; and the conversion (%) of $SO_2$ was calculated by the above-mentioned mathematical formula 1.

[TABLE 4]

| CATALYST | | PURIFICATION at 250°C (%) | | | CONVER-SION of $SO_2$ at 380°C (%) |
|---|---|---|---|---|---|
| | | CO | HC | SOF | |
| EXAMPLES | 11 | 98 | 75 | 72 | 5 |
| | 12 | 98 | 78 | 75 | 3 |
| | 13 | 90 | 80 | 80 | 7 |
| | 14 | 88 | 82 | 78 | 8 |
| | 15 | 94 | 75 | 82 | 5 |
| | 16 | 48 | 72 | 77 | 2 |
| | 17 | 49 | 78 | 77 | 5 |
| | 18 | 45 | 40 | 75 | 8 |
| | 19 | 41 | 41 | 73 | 7 |
| | 20 | 98 | 89 | 95 | 7 |
| COMPARATIVE EXAMPLES | 6 | 98 | 75 | 70 | 97 |
| | 7 | 100 | 77 | 68 | 95 |
| | 8 | 80 | 60 | 65 | 96 |
| | 9 | 94 | 88 | 93 | 89 |

As shown in Table 4, in the Preferred Embodiment Catalysts 11 to 20, it is found that maintaining purification of CO and HC can be attained and at the same time, conversion $SO_2$ can be suppressed compared with those of the Comparative Example Catalysts 6 to 9. Therefore, in the Preferred Embodiment Catalysts 11 to 20, it is found that it is hard to form sulfuric acid mist so that the exhaust amount of sulfate is reduced and particulate amount is reduced.

Also, from the Preferred Embodiment Catalysts 11 to 13 and 20, it is found that forming a catalyst support layer by a fire-resistant inorganic oxide of silica-alumina is preferable in respect to improving the purification of CO and so on.

(Examination 3)

In an examination 3, by using Preferred Embodiments 21 to 27 and Comparative Examples 10 to 14, the technical effects of the third aspect were confirmed.

Twenty-first Preferred Embodiment

Distilled water 1l was added to 128 g of magnesium nitrate ($Mg(NO_3)_2 \cdot 6H_2O$), thereby preparing solution A. 500 ml of isopropanol was added to 104 g of ethyl silicate (Si $(OC_2H_5)_4$), thereby preparing solution B. The solution B was added to the solution A and ammonia solution in limited amounts was added while being well stirred so that mixed solution of PH = 11 was obtained. After this mixed solution was matured for two hours at 100°C, it was filtered and solute was washed by distilled water. After this solute was dried at 120°C for twenty-four hours, it was baked at 600°C for three hours in the air, thereby obtaining $SiO_2$-MgO powder (atomic ratio = 1 : 1)

EP 0 734 756 A2

Next, 50 g of $SiO_2$-MgO was impregnated into 100 g of 0.5 wt% of dinitro diamine platinum solution, it was heated above water bath and water content was evaporated. Succeedingly, after it was dried at 120°C for twenty-four hours, it was calcined in the air at 500°C for one hour, and passed through 10 to 20 mesh screen. Thus the Twenty-first Preferred Embodiment Catalyst which is of pellet shape and which is composed of $SiO_2$-MgO (atomic ratio 0.5 Mg / Si + Mg) on which Pt was loaded was obtained.

When the catalyst support layer of this Twenty-first Preferred Embodiment Catalyst was investigated by using X-ray diffraction, it was found that diffraction pattern of MgO is weak and almost all $SiO_2$ and MgO formed the compound oxide. The compound oxide was supposed to be $MG_xSiO_y$ ($1<x<2$, $3\leq y\leq 4$). The kind of the catalyst support layer of the Twenty-first Preferred Embodiment Catalyst; atomic ratio (%) of alkaline earth metal; and kinds and loading amount of the support material are shown in Table 5 (hereinafter, in the same way).

[TABLE 5]

| CATALYST | | CATALYST SUPPORT LAYER | | | CATA-LYST INGREDI-ENTS | |
|---|---|---|---|---|---|---|
| | | ELEMENTS | ATOMIC RATIO of ALKALINE EARTH METAL | | PLATI-NUM GROUP ELE-MENTS (WT%) | |
| | | | | | Pt | Pd |
| EXAMPLES | 21 | $SiO_2$ - MgO | 0.5 | COMPOUND | 1.0 | - |
| | 22 | $SiO_2$ - MgO | 0.1 | ◯ | 1.0 | - |
| | 23 | $SiO_2$ - CaO | 0.5 | ◯ | 1.0 | - |
| | 24 | $SiO_2$ - BaO | 0.09 | ◯ | 1.0 | - |
| | 25 | $SiO_2$ - MgO | 0.5 | ◯ | - | 2.0 |
| | 26 | $SiO_2$ - MgO | 0.01 | ◯ | 1.0 | - |
| | 27 | $SiO_2$ - MgO | 0.8 | ◯ | 1.0 | - |
| COMPARATIVE EXAMPLES | 10 | $Al_2O_3$ | - | X | 1.0 | - |
| | 11 | $Al_2O_3$ - BaO | 0.09 | ◯ | 1.0 | - |
| | 12 | $SiO_2$ | - | X | 1.0 | - |
| | 13 | $SiO_2$ | - | X | - | 2.0 |
| | 14 | $SiO_2$, MgO | 0.5 | X | 1.0 | - |

Twenty-second Preferred Embodiment

A Preferred Embodiment Catalyst 22 composed of $SiO_2$-MgO (atomic ratio 0.1 Mg / Si + Mg) on which Pt is loaded was produced in the same way as that of the Twenty-first Preferred Embodiment, except that 28.4 g of magnesium nitrate and 208 g of ethyl silicate was employed.

Twenty-third Preferred Embodiment

A Preferred Embodiment Catalyst 23 composed of $SiO_2$-MgO (atomic ratio 0.5 Mg / Si + Mg) on which Pt is loaded was produced in the same way as that of the Twenty-first Preferred Embodiment, except that 118 g of calcium nitrate (Ca $(NO_3)_2 \cdot 4H_2O$) and 104 g of ethyl silicate was employed and PH was set to be 12.

13

Twenty-fourth Preferred Embodiment

48 g of $SiO_2$ (specific surface 200 m$^2$/g) was impregnated into 200 g of 10 wt% of barium acetate aqueous solution, it was heated above water bath and water content was evaporated. Then, after it was dried at 120°C for twenty-four hours, it was calcined at 600°C for three hours, thereby obtaining $SiO_2$-BaO powder (atomic ratio = 10 : 1 ). As in the same way as that of the Twenty-first Preferred Embodiment, Pt was loaded on this $SiO_2$-BaO powder. Thus, the Preferred Embodiment Catalyst 24 composed of $SiO_2$-BaO (atomic ratio 0.09 Ba / Si + Ba) on which Pt was loaded was obtained.

Twenty-fifth Preferred Embodiment

A Preferred Embodiment Catalyst 25 composed of $SiO_2$-MgO (atomic ratio o.5 Mg / Si + Mg) on which Pd is loaded was produced in the same way as that of the Twenty-first Preferred Embodiment, except that in place of dinitro diamine platinum solution was employed dinitro diamine palladium solution.

Twenty-sixth Preferred Embodiment

A Preferred Embodiment Catalyst 26 composed of $SiO_2$-MgO (atomic ratio 0.01 Mg / Si + Mg) on which Pt is loaded was produced in the same way as that of the Twenty-first Preferred Embodiment Catalyst, except that 2.5 g of magnesium nitrate and 208 g of ethyl silicate were used.

Twenty-seventh Preferred Embodiment

A Preferred Embodiment Catalyst 27 in which Pt was loaded on $SiO_2$-MgO (atomic ratio 0.8 Mg / Si + Mg) was produced in the same way as that of the Twenty-first Preferred Embodiment, except that 256 g of magnesium nitrate and 52 g of ethyl silicate were used.

Comparative Example 10

50 g of $\gamma$ -Al$_2$O$_3$ (specific surface area 100m$^2$/g) was impregnated into 0.5 wt% of dinitrodiamine platinum solution, it was heated above water bath and water content was evaporated. Succeedingly, after it was dried at 120°C for twenty-four hours, it was calcined in the air at 500° C for one hour, thereby obtaining whole grains by using 10 to 20 mesh under. Thus a Comparative Example Catalyst 10 composed of $\gamma$-Al$_2$O$_3$ on which Pt was loaded was obtained.

Comparative Example 11

51 g of $\gamma$ -Al$_2$O$_3$ (specific surface area 100m$^2$/g) was impregnated into 13 wt% of barium acetate aqueous solution, it was heated above water bath and water content was evaporated. Then, after it was dried at 120°C for twenty-four hours, it was calcined in the air at 500°C for three hours, thereby obtaining Al$_2$O$_3$-BaO (atomic ratio 10 : 1). Pt was loaded on this Al$_2$O$_3$-BaO powder in the same way as that of the Twenty-first Preferred Embodiment., In this way, a Comparative Example Catalyst 11 composed of Al$_2$O$_3$-BaO (atomic ratio 9%) on which Pt was loaded was obtained.
When the catalyst support layer of this Comparative Example Catalyst 11 was investigated by using X-ray diffraction, it was found that diffraction pattern of BaO is weak and almost all Al$_2$O$_3$ and BaO formed the compound oxide. The compound oxide was supposed to be Ba$_x$Al$_y$O$_z$ (1<x<10, 2<y<13.2, 4<z<20.8).

Comparative Example 12

50 g of $SiO_2$ (specific surface area 200m$^2$/g) was impregnated into 0.5 wt% of dinitro diamine platinum solution, it was heated above water bath and water content was evaporated. Succeedingly, after it was dried at 120°C for twenty-four hours, it was calcined in the air at 500°C for one hour, thereby obtaining whole grains by using 10 to 20 mesh under. Thus a Comparative Example Catalyst 12 composed of $SiO_2$ on which Pt was loaded was obtained.

Comparative Example 13

A Comparative Example Catalyst 13 composed of $SiO_2$ on which Pd was loaded was produced in the same way as that of the Comparative Example 12, except that in place of dinitro diamine platinum solution was employed dinitro diamine palladium solution.

Comparative Example 14

30 g of $SiO_2$ (specific surface area 200m$^2$/g) and 20 g of MgO were impregnated into 0.5 wt% of dinitro diamine platinum solution, it was heated above water bath and water content was evaporated. Succeedingly, after it was dried at 120°C for twenty-four hours, it was calcined in the air at 500°C for one hour, thereby obtaining grains by using 10 to 20 mesh under. Thus a Comparative Example Catalyst 14 composed of $SiO_2$ and MgO on which Pt was loaded was obtained.

When the catalyst support layer of this Comparative Example Catalyst 14 was investigated by using X-ray diffraction, remarkable diffraction pattern of MgO was found.

Evaluation 3

For each of the Preferred Embodiment Catalysts 21 to 27 and each of the Comparative Example Catalysts 10 to 14 applied to an open type apparatus for purifying exhaust gases, sulfuric acid mist generated under the following conditions were measured by using an instrument for measuring dust.

| reactor | fixed bed flow-through model |
|---|---|
| reaction gas | $O_2$ : 10 % |
| | $SO_2$ : 150 ppm |
| | $H_2O$ : 2 % |
| | nitrogen: balance |
| reaction gas flow | 5 l / minute |
| catalyst weight | 3.0 g |
| reaction temperature | 500°C |

In this evaluation, time (minutes) before the sulfuric acid mist is begun to be detected and generation amount of the sulfuric acid mist after five hours from the reaction beginning were measured. The results are shown in Table 6.

[TABLE 6]

| CATALYST | | DETECTION START TIME (MINUTES) of SULFURIC ACID MIST | CONCENTRATION of SULFURIC ACID MIST | 50% HC PURIFICATION TEMP. (°C) |
|---|---|---|---|---|
| EXAMPLES | 21 | 87 | 2400 | 210 |
| | 22 | 24 | 2500 | 205 |
| | 23 | 53 | 2800 | 220 |
| | 24 | 30 | 3200 | 220 |
| | 25 | 192 | 800 | 315 |
| | 26 | 2 | 3500 | 190 |
| | 27 | 86 | 2300 | 270 |
| | 10 | 14 | 4100 | 220 |
| COMPARATIVE EXAMPLES | 11 | 20 | 3800 | 300 |
| | 12 | 1 | 3700 | 180 |
| | 13 | 1 | 1200 | 310 |
| | 14 | 69 | 3500 | 225 |

Evaluation 4

For each of the Preferred Embodiment Catalysts 21 to 27 and each of Comparative Example Catalysts 10 to 14 after the examination of the Evaluation 3, 50 % purification temperature (°C) of HC under the following conditions were measured.

| reactor | fixed bed flow-through model |
|---|---|
| compound gas | $O_2$ : 10 % |
| | $SO_2$ : 150 ppm |
| | $H_2O$ : 2 % |
| | $C_3H_6$ : 100 ppm |
| | $C_2H_4$ : 150 ppm |
| | NO : 300 ppm |
| | $CO_2$ : 150 ppm |
| | nitrogen : balance |
| gas flow | 10l / minute |
| catalyst weight | 3.0 g |
| temperature rising speed | 10°C/ minute |
| HC detector | FID (Flame Ionization Detector) |

The purification (%) of HC was calculated by a mathematical formula 3.

$$\text{purification (\%)} = \frac{\text{inlet gas HC concentration (600 ppmc) - outlet gas HC concentration}}{\text{inlet gas concentration (600 ppmc)}} \times 100 \qquad \text{[mathematical formula 3]}$$

The results in all are shown in Table 6.

As is clear from Table 6, for example, in catalysts on which Pt is loaded, the concentrations of sulfuric acid mist in the Preferred Embodiments Catalysts 21 to 24, 26 and 27 are 14 to 24 % lower compared with those of the Comparative Example Catalysts 10 to 12 and 14.

By comparing the Preferred Embodiment Catalyst 21 with Comparative Example Catalyst 14, it is found that the concentration of sulfuric acid mist is reduced by composite catalyst and the time taken for detecting sulfuric acid mist at first increased. Therefore, the time for the first detection of sulfuric acid mist in the Preferred Embodiment Catalysts 21 to 25 and 27 are remarkably delayed compared with those in the Comparative Example Catalysts 10 to 14.

On the other hand, 50 % purification temperatures of HC in the Preferred Embodiment Catalysts 21 to 27 are in the same level compared with those in the Comparative Example Catalysts 10 to 14.

Accordingly, in the Preferred Embodiment Catalysts 21 to 27, it is possible to keep the activity in oxidation and decomposition of CO and so on as well as to suppress the formation of $SO_3$ almost securely. It is assumed the above-mentioned effects are realized because $SO_3$ which has already generated can be adsorbed into alkaline earth metal in the form of magnesium sulfate and so on in the Preferred Embodiment Catalysts 21 to 27 so that $SO_3$ is not exhausted to the outside air.

Also, based on the data of the Preferred Embodiment Catalysts 21, 22, 26 and 27, it is found that the more increase in the additive amount of alkaline earth metal, that is the more increase in the atomic ratio, the more suppressing effect in the formation of $SO_3$ can be obtained. However, if the atomic ratio exceeds 0.1, the oxidation and decomposition activity is reduced.

Therefore, the atomic ratio in the range from almost 0.02 to 0.65, especially, the atomic ratio in the range from 0.1 to 0.5 is preferable in respect of oxidation and decomposition activity and also suppressing the formation of $SO_3$.

Having now fully described the present invention, it will be apparent to one of ordinary skill in the art that many changes and modifications can be made thereto without departing from the sprit or scope of the present invention as set forth herein including the appended claims.

EP 0 734 756 A2

**Claims**

1. A catalyst for purifying exhaust gases from a diesel engine comprising:

   a catalyst substrate;

   a catalyst support layer formed on said catalyst substrate;

   at least one platinum group element loaded on said catalyst support layer; and

   a compound oxide of vanadium with at least one element selected from the group consisting of lanthanum, cerium, yttrium and tungsten, said compound oxide being loaded furhter on said catalyst support layer.

2. A catalyst for purifying exhaust gases from a diesel engine according to claim 1, wherein said compound oxide comprises 0.01 to 0.5 mol of vanadium per liter of said catalyst.

3. A catalyst for purifying exhaust gases from a diesel engine according to claim 1, wherein coating amount of said catalyst support layer ranges 10 to 120 g per liter of said catalyst.

4. A catalyst for purifying exhaust gases from a diesel engine comprising:

   a catalyst substrate;

   a catalyst support layer formed on said catalyst substrate comprising at least one inorganic oxide selected from the group consisting of silica, zeolite, silica-alumina and titania-alumina;

   at least one platinum group element loaded on said catalyst support layer; and

   at least one alkali metal loaded further on said catalyst support layer.

5. A catalyst for purifying exhaust gases from a diesel engine according to claim 4, wherein said inorganic oxide has an average particle diameter of 20 m or less.

6. A catalyst for purifying exhaust gases from a diesel engine according to claim 4, wherein said inorganic oxide has a specific surface area of $10m^2/g$ or more.

7. A catalyst for purifying exhaust gases from a diesel engine according to claim 4, wherein loading amount of said alkali metal ranges 0.01 to 0.1 mol of said alkali metal per liter of said catalyst.

8. A catalyst for purifying exhaust gases from a diesel engine comprising:

   a catalyst substrate;

   a catalyst support layer formed on said catalyst substrate comprising a compound oxide of silica and at least one alkaline earth metal; and

   at least one platinum group element loaded on said catalyst support layer.

9. A catalyst for purifying exhaust gases from a diesel engine according to claim 8, wherein an atomic ratio of said alkaline earth metal element to said alkaline earth metal element and a silicon ranges 0.02 to 0.65.

18